# EUROPÄISCHE PATENTSCHRIFT

(11) **EP 0 628 746 B1**
(45) Veröffentlichungstag und Bekanntmachung des Hinweises auf die Patenterteilung: **23.10.1996**
(21) Anmeldenummer: 94104046.1
(22) Anmeldetag: 16.03.1994
(51) Int. Cl.: F16F 15/12, F16H 55/36

(54) **Torsionsschwingungsdämpfer**
Torsional vibration damper
Dispositif amortisseur de torsion

(30) Priorität: 09.06.1993 DE 4319168
(43) Veröffentlichungstag der Anmeldung: 14.12.1994
(73) Patentinhaber: Firma Carl Freudenberg, D-69469 Weinheim (DE)
(72) Erfinder: Ullrich, Günter, D-69502 Hemsbach (DE); Hönlinger, Herwig, D-68649 Gross-Rohrheim (DE); Henrich, Uwe, D-64853 Otzberg 4 (DE)

(56) Entgegenhaltungen:
- EP-A- 0 200 815
- EP-A- 0 460 292
- GB-A- 814 062
- US-A- 1 896 962
- US-A- 4 917 529

## Beschreibung

Die Erfindung betrifft einen Torsionsschwingungsdämpfer, umfassend einen im wesentlichen topfförmigen Nabenring aus tiefgezogenem Blech, dessen Boden zumindest eine Durchbrechung zur Befestigung an einem mit Drehschwingungen beaufschlagbaren Maschinenteil aufweist, wobei der Nabenring mittels zumindest eines Federelements aus elastomerem Werkstoff mit zumindest einem Trägheitsring relativ verdrehbar verbunden ist, wobei der Boden mit einem sich in axialer Richtung erstreckenden, ringförmigen Zentrierbund versehen ist, der den Außenumfang des Maschinenteils umgreift und wobei der Zentrierbund und der Boden einstückig ineinander übergehend ausgebildet sind.

Ein solcher Torsionsschwingungsdämpfer ist aus der EP 0 460 292 A1 bekannt. Der vorbekannte Torsionsschwingungsdämpfer besteht aus einem tiefgezogenen Blechteil und einem damit verbundenen, auf einer Welle festlegbaren, hohlzylindrischen Nabenring. Das Blechteil und der Nabenring sind einstückig ineinander übergehend durch Tiefziehen erzeugt, wobei eine metallische Schrumpfhülse auf dem Außenumfang des Nabenrings durch Aufschrumpfen unverrückbar festgelegt ist. Der Nabenring und die Schrumpfhülse umschließen einen Wellenzapfen entlang seines gesamten Außenumfangs anliegend.

Ein weiterer Torsionsschwingungsdämpfer ist aus der EP-0 218 774 B1 bekannt. Dabei ist allerdings zu beachten, daß eine Zentrierung des Nabenrings auf dem Maschinenteil nur dadurch zu erzielen ist, daß entweder eine zentrale Ausnehmung des Nabenrings von einem Wellenstumpf des Maschinenteils durchdrungen ist, wobei beide Teile eng toleriert sind oder daß zur Befestigung am Maschinenteil Paßschrauben verwendet werden. Dabei ist allerdings von Nachteil, daß die Durchbrechungen im Boden des Nabenrings und die Bohrungen im Maschinenteil besonders eng toleriert sein müssen, was in wirtschaftlicher Hinsicht wenig befriedigend ist. Außerdem ist es in fertigungstechnischer Hinsicht problematisch, einen Nabenring aus tiefgezogenem Blech für eine derartige Verbindung ausreichend eng zu tolerieren. Eine derartige Befestigung ist in wirtschaftlicher Hinsicht wenig befriedigend.

Der Erfindung liegt die Aufgabe zugrunde, einen Torsionsschwingungsdämpfer der eingangs genannten Art derart weiterzuentwickeln, daß eine vereinfachte, staub- und flüssügkeitsundruchlässige Befestigung des Nabenrings an dem mit Drehschwingungen beaufschlagbaren Maschinenteil ermöglicht wird.

Diese Aufgabe wird erfindungsgemäß mit den kennzeichnenden Merkmalen von Anspruch 1 gelöst. Auf eine vorteilhafte Ausgestaltung nimmt der Unteranspruch Bezug.

Zur Lösung der Aufgabe ist es vorgesehen, daß der Zentrierbund den Außenumfang des Maschinenteils teilweise anliegend umgreift, daß der Zentrierbund durch zumindest zwei gleichmäßig in Umfangsrichtung verteilte, aus dem Boden umgeformte Haltekrallen gebildet ist, daß die durch die Erzeugung der Haltekrallen gebildeten Ausnehmungen von Dichtungen aus elastomerem Werkstoff verschlossen sind und daß die Dichtungen und das Federelement einstückig ineinander übergehend ausgebildet sind. Hierbei ist von Vorteil, daß der Torsionsschwingungsdämpfer durch seinen Zentrierbund auch dann mittels einfacher Schrauben einwandfrei in seiner Lage, bezogen auf das Maschinenteil, fixiert werden kann, wenn dieses eine ebene Stirnfläche ohne Wellenstumpf aufweist. Eine Befestigung an Stirnflächen, die einen Außendurchmesser aufweisen, der nahezu genau so groß ist, wie der Innendurchmesser des Nabenrings, ist problemlos möglich. Der ringförmige Zentrierbund, der sich in axialer Richtung erstreckt, wird innenumfangsseitig derart bearbeitet, daß er die für eine Zentrierung erforderlichen Toleranzen aufweist und auf den Außenumfang des Maschinenteil aufgesteckt wird. Einer Zentrierung über die Befestigungsschrauben bedarf es hierbei nicht. In wirtschaftlicher Hinsicht ist das von hervorzuhebender Bedeutung. Außerdem ist die Herstellbarkeit eines derartigen Nabenringes vergleichsweise einfach, da der Zentrierbund und der Boden einstückig ineinander übergehend ausgebildet sind. Insbesondere für Anwendungsfälle, in denen eine besonders geringe Trägheitsmasse gefordert ist, um möglichst rasche Drehzahländerungen realisieren zu können, ist ein Nabenring aus tiefgezogenem Blech von Vorteil. Er weist gegenüber einem gegossenen Nabenring eine wesentlich verringerte Masse auf.

Der Zentrierbund ist durch zumindest zwei gleichmäßig in Umfangsrichtung verteilte, aus dem Boden umgeformte Haltekrallen gebildet. Bevorzugt gelangen zumindest drei gleichmäßig in Umfangsrichtung verteilte Haltekrallen zur Anwendung, um eine gute Abstützung des Torsionsschwingungsdämpfers auf dem als Träger dienenden Maschinenteil zu gewährleisten. In Abhängigkeit von den Gegebenheiten des Anwendungsfalles können die Haltekrallen in axialer Richtung beiderseits aus dem Boden des Nabenringes umgeformt werden. Sind die Haltekrallen beispielsweise derart angeordnet, daß sie innerhalb des Nabenringes liegen und von diesem umschlossen sind, umschließt der Torsionsschwingungsdämpfer das Wellenende des Maschinenteils. Die gesamte axiale Ausdehnung ist bei einer derartigen Ausgestaltung besonders gering. Nach einer anderen Ausgestaltung kann sich der Zentrierbund in axialer Richtung entgegen den Halteflächen des Nabenrings erstrecken.

Die durch die Erzeugung der Haltekrallen gebildeten Ausnehmungen sind von Dichtungen aus elastomerem Werkstoff verschlossen, wobei die Dichtungen und das Federelement einstückig ineinanderübergehend ausgebildet sind. Der elastomere Werkstoff der Dichtungen erstreckt sich bevorzugt ringförmig zwischen den Krallen. Hierbei ist von Vorteil, daß der Nabenring staub- und flüssigkeitsundurchlässig an dem Maschinenteil befestigt werden kann. In axialer Richtung angrenzende Bauteile, wie beispielsweise eine auf dem Maschinenteil angeordneter Radialwellendichtring, können dadurch vor Verunreinigungen geschützt werden. Die Dichtungen und das Federelement sind durch einen Gummiüberlauf miteinander verbunden und dadurch besonders einfach und kostengünstig herstellbar.

Der Trägheitsring kann beispielsweise als Riemenscheibe ausgebildet sein, auf dem zumindest ein Riemen zum Antrieb von Nebenaggregaten geführt wird.

Die Herstellung des Zentrierbunds erfolgt dadurch, daß eine zunächst ebene Scheibe in einem ersten Verfahrensschritt in die topfförmige Gestalt des Nabenrings überführt wird und daß die Haltekrallen in einem zweiten Schritt aus dem ebenen Boden ausgestanzt und in axialer Richtung umgeformt werden. Der erste und der zweite Schritt zur Herstellung des Nabenrings können in einem gemeinsamen Werkzeug erfolgen, wodurch eine wirtschaftliche Herstellbarkeit des Torsionsschwingungsdämpfers bedingt ist. Das Federelement kann gebunden oder ungebunden innerhalb des Radialspalts zwischen Naben- und Trägheitsring gehalten sein.

Der erfindungsgemäße Torsionsschwingungsdämpfer wird nachfolgend anhand der beigefügten Zeichnungen näher erläutert.

Fig. 1 zeigt einen Torsionsschwingungsdämpfer, der einen Trägheitsring umfaßt, wobei der Trägheitsring als Riemenscheibe ausgebildet ist und mehrere Riemen aufzunehmen vermag.

In Fig. 2 ist ein erstes Ausführungsbeispiel der Erfindung gezeigt, bei dem zwei in axialer Richtung benachbarte Trägheitsringe zur Anwendung gelangen, die jeweils als Riemenscheiben ausgeführt sind. Die beiden benachbarten Trägheitsringe sind in axialer Richtung durch einen Gleitring relativ verdrehbar aneinander abgestützt. Die herstellungsbedingten Ausnehmungen im Boden des Nabenrings sind durch Dichtungen verschlossen.

In Fig. 3 ist ein zweites erfindungsgemäßes Ausführungsbeispiel ähnlich dem Ausführungsbeispiel aus Fig. 2 gezeigt, wobei der Torsionsschwingungsdämpfer das Wellenende zur Verringerung des Biegemoments und der axialen Ausdehnung übergreift.

In Fig. 4 ist eine Seitenansicht des Torsionsschwingungsdämpfers aus Fig. 1 gezeigt.

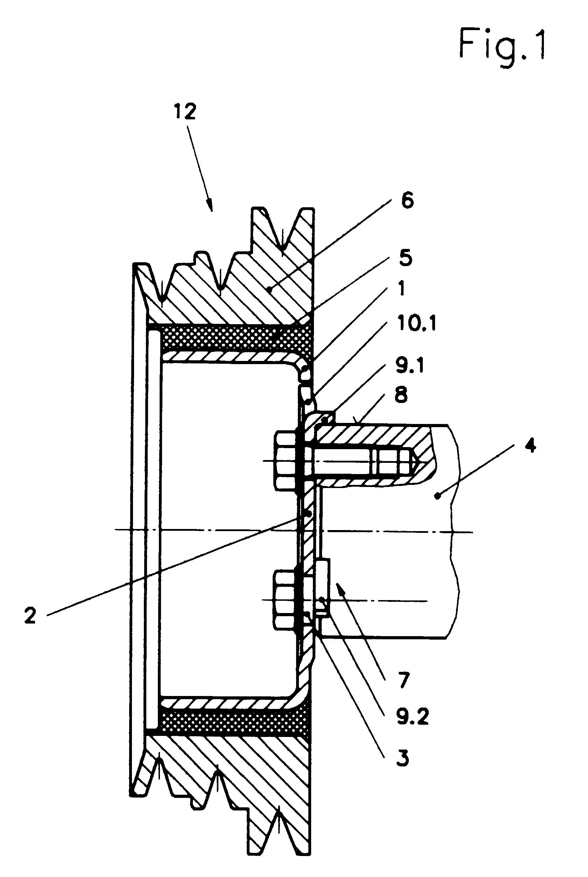

In Fig. 1 ist ein Torsionsschwingungsdämpfer gezeigt, der im wesentlichen aus einem Nabenring 1 und einem Trägheitsring 6 besteht, die durch eine Federelement 5 aus elastomerem Werkstoff relativ verdrehbar verbunden sind. Der Nabenring 1 ist topfförmig gestaltet und besteht aus einem tiefgezogenen Blech, das in diesem Ausführungsbeispiel eine bevorzugte Dicke von 2 bis 6 mm aufweist. Der Boden 2 des Nabenrings 1 ist mit einem einstückig angeformten Zentrierbund 7 versehen, der das Maschinenteil 4, das in diesem Ausführungsbeispiel als Kurbelwelle eines Kraftfahrzeuges ausgebildet ist, auf seinem Außenumfang 8 umgreift. Der Zentrierbund 7 ist durch drei gleichmäßig in Umfangsrichtung verteilte Haltekrallen 9.1, 9.2, 9.3 gebildet, die aus dem Boden 2 umgeformt wurden. Der Außendurchmesser des Maschinenteils 4 ist im Vergleich zum Innendurchmesser des Nabenrings vergleichsweise groß, wobei die Stirnseite des Maschinenteils eben ausgebildet ist. Das Maschinenteil 4 berührt mit seiner Stirnseite den Boden 2 des Nabenrings flächig anliegend. Durch die Ausgestaltung des Zentrierbunds ist eine in fertigungstechnischer und wirtschaftlicher Hinsicht einfache Zentrierung des Torsionsschwingungsdämpfers relativ zum Maschinenteil 4 gegeben. Der Trägheitsring 6 ist in diesem Ausführungsbeispiel als 3-fach-Riemenscheibe 12 ausgebildet, die mit abgestuften Durchmessern versehen ist. Durch die aus dem Boden 2 umgeformten Haltekrallen 9.1, 9.2, 9.3, sind Ausnehmungen 10.1, 10.2, 10.3 gebildet, die in diesem Ausführungsbeispiel offen sind.

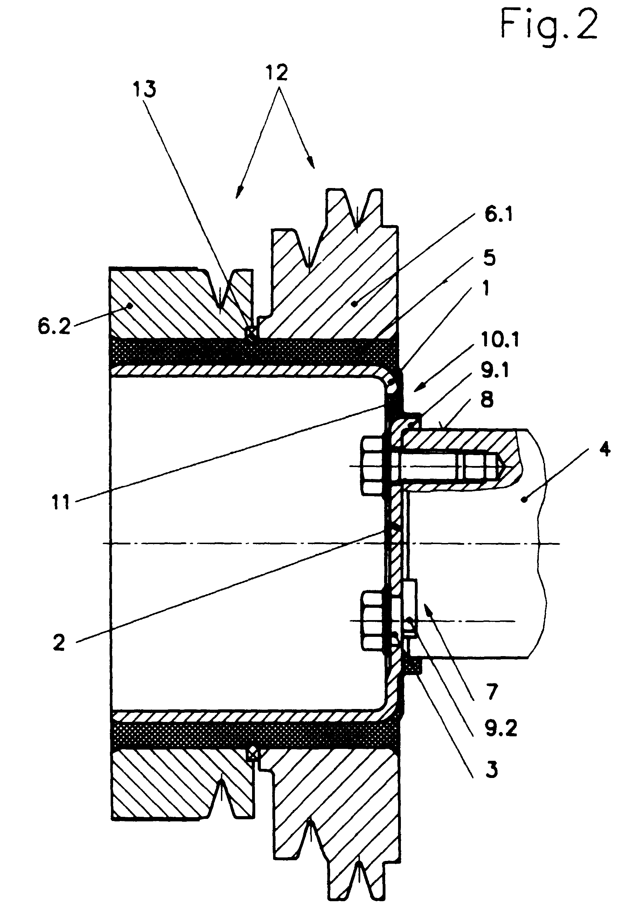

In Fig. 2 ist ein Ausführungsbeispiel eines erfindungsgemäßen Torsionsschwingungsdämpfers gezeigt. Abweichend vom Torsionsschwingungsdämpfer aus Fig. 1 ist der Trägheitsring 6 zweiteilig 6.1, 6.2 ausgebildet, wobei jeder Trägheitsring 6.1, 6.2 als Riemenscheibe 12 ausgebildet ist. Die beiden Trägheitsringe 6.1, 6.2 sind einander in axialer Richtung mit Abstand benachbart zugeordnet, wobei die einander zugewandten Stirnseiten der Trägheitsringe 6.1, 6.2 durch einen Gleitring 13 in axialer Richtung aufeinander abgestützt sind. Der Gleitring 13 besteht bevorzugt aus einem polymeren Werkstoff, beispielsweise Polytetrafluorethylen. Durch seine guten Gleiteigenschaften sind die beiden Trägheitsringe 6.1, 6.2, die zur Schwingungsdämpfung in einem breiten Frequenzbereich eine voneinander abweichende Masse aufweisen, relativ verdrehbar zueinander gelagert. Der eine Trägheitsring 6.1 berührt den Gleitring 13 mit einer ebenen Stirnfläche anliegend, während der andere Trägheitsring 6.2 den Gleitring im Bereich seiner axialen und radialen Begrenzungsfläche anliegend berührt. Der Gleitring 13 umschließt das Federelement 5 unter radialer Vorspannung umfangsseitig.

Um zu verhindern, daß Verunreinigungen durch die Ausnehmungen 10.1, 10.2, 10.3 dringen, die durch die Herstellung der Haltekrallen 9.1, 9.2, 9.3 entstanden sind, sind die Ausnehmungen 10.1, 10.2, 10.3 in diesem Ausführungsbeispiel durch Dichtungen 11 verschlossen, die einstückig ineinander übergehend mit dem Federelement 5 ausgebildet sind. Die einstückige Verbindung wird durch einen Gummiüberlauf erzeugt. Auch in diesem Ausführungsbeispiel umschließen die Haltekrallen 9.1, 9.2, 9.3 den Außenumfang 8 des Maschinenteils 4 anliegend. Der Torsionsschwingungsdämpfer ist bevorzugt durch eine Übergangspassung H7/H8 auf dem Außenumfang 8 des Maschinenteils gehalten.

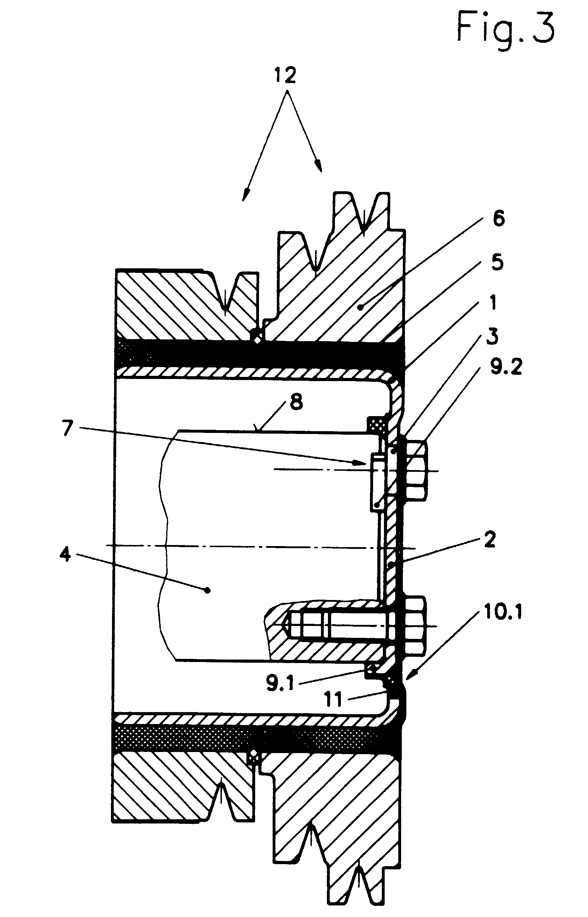

In Fig. 3 ist ein zweites Ausführungsbeispiel der Erfindung gezeigt, ähnlich dem Ausführungsbeispiel aus Fig. 2, wobei der Torsionsschwingungsdämpfer das stirnseitige Ende des Maschinenteils 4 mit radialem Abstand umschließt. Die Biegespannungen im Maschinenteil 4 und die gesamte axiale Ausdehnung können durch diese Ausgestaltung reduziert werden.

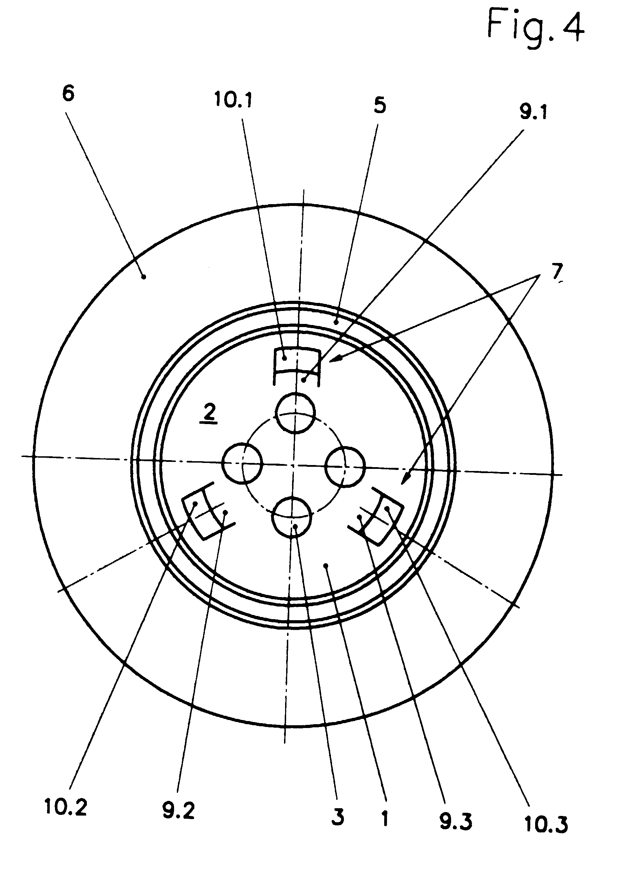

In Fig. 4 ist die Seitenansicht des Torsionsschwingungsdämpfers aus Fig. 1 gezeigt. Der Boden 2 des Nabenrings 1 ist mit vier gleichmäßig in Umfangsrichtung verteilten Durchbrechungen 3 versehen, die zur Befestigung des Torsionsschwingungsdämpfer an dem in Fig. 1 gezeigten Maschinenteil 4 von Befestigungsschrauben durchdrungen sind. Außerdem sind im Boden 2 drei gleichmäßig in Umfangsrichtung verteilte Haltekrallen 9.1, 9.2, 9.3 vorgesehen, die den Zentrierbund 7 bilden, mit dem der Torsionsschwingungsdämpfer am Außenumfang des Maschinenteils 4 aufgesetzt ist. Der Nabenring 1 ist von einem Federelement 5 umschlossen, das adhäsiv in einem durch den Nabenring 1 und den Trägheitsring 6 begrenzten Spalt festgelegt ist.

## Patentansprüche

1. Torsionsschwingungsdämpfer, umfassend einen im wesentlichen topfförmigen Nabenring (1) aus tiefgezogenem Blech, dessen Boden (2) zumindest eine Durchbrechung (3) zur Befestigung an einem mit Drehschwingungen beaufschlagbaren Maschinenteil (4) aufweist, wobei der Nabenring (1) mittels zumindest eines Federelements (5) aus elastomerem Werkstoff mit zumindest einem Trägheitsring (6) relativ verdrehbar verbunden ist, wobei der Boden (2) mit einem sich in axialer Richtung erstreckenden, ringförmigen Zentrierbund (7) versehen ist, der den Außenumfang (8) des Maschinenteils (4) umgreift und wobei der Zentrierbund (7) und der Boden (2) einstückig ineinander übergehend ausgebildet sind, dadurch gekennzeichnet, daß der Zentrierbund (7) den Außenumfang (8) des Maschinenteils (4) teilweise anliegend umgreift, daß der Zentrierbund (7) durch zumindest zwei gleichmäßig in Umfangsrichtung verteilte, aus dem Boden (2) umgeformte Haltekrallen (9.1, 9.2) gebildet ist, daß die durch die Erzeugung der Haltekrallen (9.1, 9.2) gebildeten Ausnehmungen (10.1, 10.2) von Dichtungen (11) aus elastomerem Werkstoff verschlossen sind und daß die Dichtungen (11) und das Federelement (5) einstückig ineinander übergehend ausgebildet sind.

2. Torsionsschwingungsdämpfer nach Anspruch 1, dadurch gekennzeichnet, daß der Trägheitsring (6) als Riemenscheibe (12) ausgebildet ist.

## Claims

1. A torsional vibration damper comprising an essentially pot-shaped hub ring (1) of deep-drawn sheet metal, whose base (2) has at least one opening (3) for attachment to a machine part (4) which can be acted upon by torsional vibrations, the hub ring (1) being connected by means of at least one spring element (5) made of elastomeric material to at least one inertia ring (6) so as to be relatively rotatable, the base (2) being provided with an annular centring collar (7) which extends in the axial direction and engages around the outside circumference (8) of the machine part (4), and the centring collar (7) and the base (2) being designed to merge integrally into one another, characterized in that the centring collar (7) engages around the outside circumference (8) of the machine part (4), resting partially against it, in that the centring collar (7) is formed by at least two holding claws (9.1, 9.2) which are uniformly distributed in the circumferential direction and are moulded out of the base (2), in that the cutouts (10.1, 10.2) formed by producing the holding claws (9.1, 9.2) are closed by seals (11) made of elastomeric material, and in that the seals (11) and the spring element (5) are designed to merge integrally into one another.

2. A torsional vibration damper according to claim 1, characterized in that the inertia ring (6) is designed as a pulley (12).

## Revendications

1. Dispositif amortisseur de vibrations torsionnelles, comprenant une frette de moyeu (1) en tôle emboutie essentiellement en forme de pot dont le fond (2) présente au moins une découpure (3) permettant la fixation sur un organe de machine (4) susceptible de subir des vibrations torsionnelles, la frette de moyeu (1) étant reliée au moyen d'au moins un corps élastique (5) en matériau élastomère à au moins une bague d'inertie (6) de manière à admettre une rotation relative, le fond (2) étant pourvu d'une collerette de centrage (7) en forme d'anneau s'étendant dans le sens axial, qui enveloppe la circonférence extérieure (8) de l'organe de machine (4), et la collerette de centrage (7) et le fond (2) sont exécutés de manière à se fondre l'un dans l'autre, caractérisé en ce que la collerette de centrage (7) enveloppe partiellement la circonférence extérieure (8) de l'organe de machine (4) de manière à la toucher, en ce que la collerette de centrage (7) est constituée d'au moins deux griffes de retenue (9.1, 9.2) formées à partir du fond (2) et réparties uniformément dans le sens circonférentiel, en ce que les creux (10.1, 10.2) obtenus par la formation des griffes de retenue (9.1, 9.2) sont obturés par des joints d'étanchéité (11) en matériau élastomère et en ce que les joints d'étanchéité (11) et le corps élastique (5) sont exécutés de manière à se fondre les uns dans les autres.

2. Dispositif amortisseur de vibrations torsionnelles selon la revendication 1, caractérisé en ce que la bague d'inertie (6) est exécutée comme poulie (12).
